# EUROPEAN PATENT SPECIFICATION

(11) **EP 4 216 325 B1**
(45) Date of publication and mention of the grant of the patent: **25.03.2026**
(21) Application number: 21869479.2
(22) Date of filing: 21.09.2021
(51) Int. Cl.: H01M 10/04, H01M 50/152, H01M 50/533, H01M 50/536

(54) **POWER STORAGE DEVICE**
ENERGIESPEICHERVORRICHTUNG
DISPOSITIF DE STOCKAGE D'ÉLECTRICITÉ

(30) Priority: 21.09.2020 US 202063081068 P
(43) Date of publication of application: 26.07.2023
(73) Proprietor: Panasonic Intellectual Property Management Co., Ltd., Osaka-shi, Osaka 540-6207 (JP)
(72) Inventor: GESHI, Shinya, Osaka-shi, Osaka 540-6207 (JP); SAKAMOTO, Shinichi, Osaka-shi, Osaka 540-6207 (JP); SHIMIZU, Kazumichi, Osaka-shi, Osaka 540-6207 (JP); KOZUKI, Kiyomi, Osaka-shi, Osaka 540-6207 (JP); KOHIRA, Kazutoshi, Osaka-shi, Osaka 540-6207 (JP)
(74) Representative: Novagraaf International SA
(86) International application number: PCT/JP2021/034620
(87) International publication number: WO 2022/059797

(56) References cited:
- WO-A1-2019/074198
- JP-A- 2000 243 373
- JP-A- 2001 256 994
- JP-A- 2012 510 143
- JP-A- H11 312 509
- JP-B2- 5 858 158

## Description

### TECHNICAL FIELD

The present disclosure relates to a power storage device.

### BACKGROUND ART

Conventionally, a power storage device that stores electricity is known (e.g., Patent Literature 1). The power storage device of Patent Literature 1 is a battery including a wound electrode group in which a positive electrode plate and a negative electrode plate are wound with a separator interposed therebetween; a battery case accommodating the wound electrode group; and a battery sealing lid that seals the battery case and also serves as an external output terminal. In the power storage device of Patent Literature 1, a plurality of current collecting tabs drawn out from the wound electrode group are welded to a current collecting ring disposed at an upper portion of the wound electrode group. The current collecting ring and battery sealing lid are connected to each other with a lead plate. Patent Literature 2 discloses a current collecting structure for a secondary battery in which a plurality of current collecting tabs extending from an electrode plate group are joined to a current collector of a terminal.

### Citation List

### Patent Document

Patent Literature 1: Japanese Patent No. 4356209
Patent Literature 2: Japanese Patent No. 5858158

### SUMMARY OF THE INVENTION

### PROBLEM TO BE SOLVED BY THE INVENTION

However, in the power storage device of Patent Literature 1, the plurality of current collecting tabs are connected to the battery sealing lid through the current collecting ring and lead plate. Therefore, with the presence of particularly the lead plate, the internal resistance of the power storage device is increased. Under such circumstances, the present disclosure aims to, as one of the purposes, decrease the internal resistance of the power storage device.

### MEANS FOR SOLVING THE PROBLEM

The invention is as set out in the independent claims, further aspects of the invention are outlined in the dependent claims. Embodiments that do not fall within the scope of the claims do not describe part of the invention.

An aspect of the present disclosure relates to a power storage device. The power storage device includes a first electrode having a strip first current collector, and a first active material layer carried on the first current collector; a second electrode having a strip second current collector, and a second active material layer carried on the second current collector; and a separator interposed between the first electrode and the second electrode, wherein the first electrode, the second electrode, and the separator form a columnar wound body, the power storage device further includes a cylinder covering an outer periphery of the columnar wound body, electrically connected to the second current collector, and having a first opening, a sealing body that seals the first opening, and at least one first tab that electrically connects the first current collector and the sealing body, one end of the first tab is connected to the first current collector, the other end of the first tab is connected to the sealing body, the sealing body has a first member including a first face facing away from the columnar wound body, and a second member including a second face facing the columnar wound body, the other end of the first tab is welded to the first face of the first member to form a first welding portion, and the first welding portion is positioned between the first face and the second face. According to the claimed invention, the first member is an annular member having a through hole at a center thereof for the first tab to pass through.

### Effects of the Invention

The present disclosure allows for decrease in the internal resistance of the power storage device.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

[FIG. 1] FIG. 1 is a cross sectional view schematically illustrating a power storage device of Embodiment 1.
[FIG. 2] FIG. 2 is a cross sectional view schematically illustrating a power storage device of Embodiment 2.
[FIG. 3] FIG. 3 is a developed view of a columnar wound body of Embodiment 3.
[FIG. 4] FIG. 4 is a cross sectional view schematically illustrating a power storage device of Embodiment 3.

### DESCRIPTION OF THE EMBODIMENTS

Embodiments of the power storage device of the present disclosure are described below with examples. However, the present disclosure is not limited to the examples below. In the description below, specific numeral values and materials are given as examples, but other numeral values and materials can be used as long as effects of the present disclosure can be achieved.

A power storage device of the present disclosure includes a strip first electrode, a strip second electrode, and a separator interposed between the first electrode and second electrode. The first electrode, second electrode, and separator form a columnar wound body. That is, the first electrode and second electrode are wound with the separator interposed therebetween.

The first electrode has a strip first current collector, and a first active material layer carried on the first current collector. The second electrode has a strip second current collector, and a second active material layer carried on the second current collector.

The power storage device further includes a cylinder having a first opening, a sealing body that seals the first opening, and at least one first tab. The contour of the first opening matches the contour of the sealing body, and generally is circular. The first tab has, for example, a ribbon shape or a strip shape. An insulating material such as a gasket may be interposed between the cylinder and sealing body.

The cylinder covers the outer periphery of the columnar wound body and is electrically connected to the second current collector. The cylinder may be formed of a conductive material.

The sealing body has a first member including a first face facing away from the columnar wound body, and a second member including a second face facing the columnar wound body. That is, the sealing body is formed of a plurality of members, and may further include another member. The first member and second member are disposed so as to partially overlap each other in the axis direction of the cylinder. The first member and second member may be electrically connected. A thick conductive path can be formed in this manner.

The first tab electrically connects the first current collector to the sealing body. One end of the first tab is connected to the first current collector. The other end of the first tab is connected to the sealing body. The first tab may be integrated with the first current collector or separated from the first current collector. When the first tab is integrated with the first current collector, one end of the first tab is a proximal end of the first tab, and the other end of the first tab is a distal end of the first tab. When the first tab is separated from the first current collector, one end of the first tab is electrically connected to the first current collector by welding and the like.

The other end of the first tab is welded to the first face of the first member to form a first welding portion. The first welding portion may be formed by, for example, laser welding or ultrasonic welding. The first welding portion is positioned between the first face and the second face.

As described above, with the present disclosure, the first tab is directly connected to the sealing body. That is, no intermediate member such as a current collecting ring is present between the first tab and the sealing body. Thus, the internal resistance of the power storage device can be decreased. Furthermore, with the present disclosure, the first welding portion is positioned between the first face and the second face, and therefore the connection strength of the first welding portion can be made strong. Furthermore, when the first tab is welded to the first face of the first member facing away from the columnar wound body, the welding step is stabilized. This is because a robust first member (thickness is, for example, 500 µm or more) is interposed between the first welding portion and the columnar wound body, and therefore the sputter at the time of welding does not splash easily to the columnar wound body. Stabilizing the welding step allows for an increase in the strength of the first welding portion easily, which decreases the connection resistance of the first welding portion easily.

The first welding portion can be sandwiched between the first face and the second face. This configuration allows for decrease in contact resistance between the second member and first welding portion. Furthermore, the second face may also be joined with the first tab. Specifically, by welding the second member and the first tab from the rear side of the second face of the second member, they may be joined. This configuration allows for further decrease in the resistance between the first tab and the second member.

The first face, first tab, and second face may be joined with a common welding portion. This configuration allows for decrease in resistance, and also stronger fixing of the first tab to the sealing plate. When the second member is accommodated in a recessed portion of the first member, the second member also having a recessed portion at its outer face (upper face) similarly with the first member allows for the portion where the second member faces the first tab to be thin, which makes welding easier when joining the second member with the first tab.

The first member may be an annular member having a through hole at a center for the first tab to pass through. The second member may plug the through hole. The second member may have a disc shape. The disc second member may have a center portion and a flange portion (outer periphery portion) at its peripheral edge.

The first member and second member may be welded at a second welding portion **radially** outside of the first welding portion. An even thicker conductive path can be formed in this manner.

The first member may have a recessed portion formed into an annular shape and having the first face as a bottom face. The second member may have a center portion that plugs the through hole, and an outer periphery portion provided surrounding the center portion. The outer periphery portion may be a flange portion of the disc shaped second member. The outer periphery portion may be joined to the first member by the second welding portion throughout its entire periphery. In this case, the second welding portion forms a thick conductive path, and a gap that may be formed between the first member and second member can be sealed.

The first tab may be joined with the second face and first face. This configuration allows for formation of a thick conductive path and decrease in the internal resistance of the power storage device.

The power storage device may include a plurality of first tabs. At least two of the other ends of the first tab may be overlapped with each other and welded to the first face of the first member. With this configuration, welding portions can be decreased compared with the case where a plurality of first tabs are welded to the first face one by one. A recessed portion for accommodating an end portion of the first tab may be formed in a region in the first face where the first tab is disposed, or a region in the second face facing the first tab.

The cylinder may be formed of a portion of a metal case. For example, the cylinder may be formed of a side wall portion of a bottomed cylindrical metal case.

The cylinder may be formed of a wound body of a metal sheet. The metal sheet may be integrated with a second current collector, or separated from the second current collector. The metal sheet thickness TC may be the same as the thickness T2 of the second current collector, and may satisfy, for example, 0.5 ≤ TC/T2 ≤ 1.5. When the cylinder is formed of a **metal sheet,** the metal sheet is preferably wound, for example, twice or more around the outer periphery of the columnar wound body to increase the strength of the cylinder. This configuration allows for continuous steps: a step of forming the wound body to a step of accommodating the wound body to the metal case. Furthermore, without joining the bottom of the metal case with the second current collecting plate, the metal case and second electrode can be electrically connected, and therefore works involved with connection can be simplified. Also, by electrically connecting the terminal end of the second electrode in the winding direction with the metal case, the current collecting paths between the metal case and the second electrode increase, which allows for a decrease in resistance even more. The cylinder can be formed by joining the terminal end in the winding direction of the metal sheet with another portion of the outer surface of the metal sheet.

In the following, an example of the power storage device of the present disclosure is described in detail with reference to the drawings. For the elements in an example of the power storage device described below, the above-described elements can be used. The elements of the example of the power storage device described below can be changed based on the description above. The matters described below can also be applied to the above-described embodiment. Of the elements in the example of the power storage device described below, elements that are not essential to the power storage device of the present disclosure can be omitted. The figures shown below are schematic, and do not accurately represent shapes and numbers of actual members.

### << Embodiment 1 >>

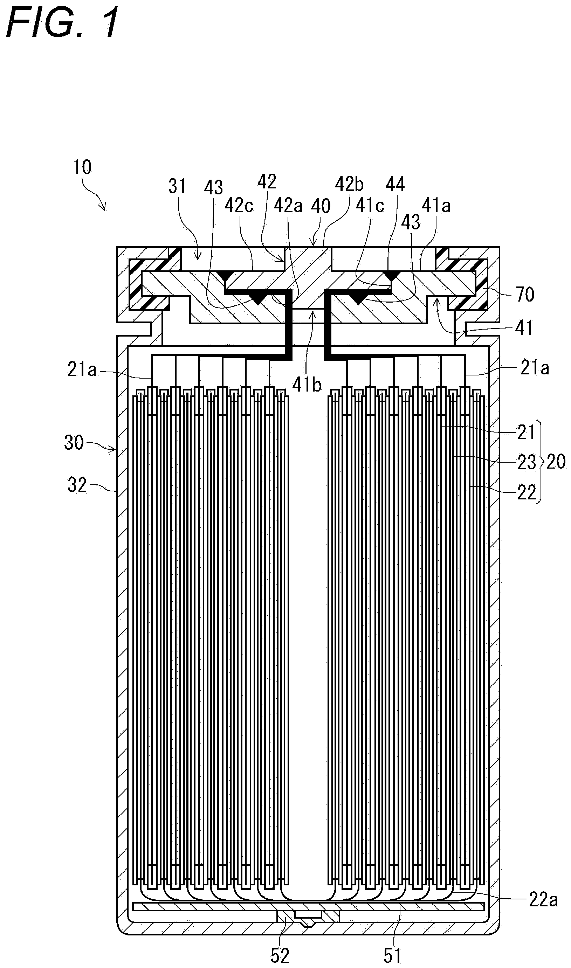

Embodiment 1 of the present disclosure is described. A power storage device 10 of this embodiment is a lithium ion secondary battery, without limitation. As shown in FIG. 1, the power storage device 10 includes a columnar wound body 20, a case 30, and a sealing body 40.

The columnar wound body 20 is formed by winding a strip positive electrode 21, a strip negative electrode 22, and a separator 23 interposed between the positive electrode 21 and negative electrode 22. The positive electrode 21 is an example of the first electrode. The negative electrode 22 is an example of the second electrode.

The positive electrode 21 has a strip positive electrode current collector, and a positive electrode active material layer carried thereon. A plurality of positive electrode current collecting tabs 21a are connected to the positive electrode current collector. The positive electrode current collector is an example of the first current collector. The positive electrode active material layer is an example of the first active material layer. The positive electrode current collecting tab 21a is an example of the first tab.

For the positive electrode current collector, a strip metal material is used. The strip metal material may be metal foil, metal porous body, etc. Examples of the metal material include aluminum, aluminum alloy, nickel, and titanium. The positive electrode current collector has a thickness of, for example, 10 µm or more and 100 µm or less.

The positive electrode active material layer includes, for example, a positive electrode active material, conductive agent, and binder. The positive electrode active material layer is produced by, for example, applying a positive electrode mixture slurry containing a positive electrode active material, conductive agent, and binder onto both sides of the positive electrode current collector, drying the applied coating, and then rolling. The positive electrode active material is a material that stores and releases lithium ions. Examples of the positive electrode active material include a lithium-containing transition metal oxide, fluorinated transition metal, polyanion, fluorinated polyanion, and sulfide of transition metals.

A plurality of positive electrode current collecting tabs 21a are formed to be integrated with the positive electrode current collector. The positive electrode current collecting tabs 21a extend from one end portion (upper end portion in FIG. 1) along the longitudinal direction of the positive electrode current collector. When the positive electrode 21 is wound, a portion of the plurality of positive electrode current collecting tabs 21a coincide with each other in the circumferential direction. The remaining plurality of positive electrode current collecting tabs 21a coincide with each other when the positive electrode 21 is wound in the circumferential direction.

The negative electrode 22 has a strip negative electrode current collector, a negative electrode active material layer carried thereon, and a negative electrode current collector exposed portion 22a formed at one end in the width direction of the negative electrode current collector. The negative electrode current collector is an example of the second current collector. The negative electrode active material layer is an example of the second active material layer.

For the negative electrode current collector, a strip metal material is used. The strip metal material may be metal foil, metal porous body, etc. Examples of the metal material include copper, copper alloy, nickel, and stainless steel. The negative electrode current collector has a thickness of, for example, 10 µm or more and 100 µm or less.

The negative electrode active material layer includes, for example, a negative electrode active material, a conductive agent, and a binder. The negative electrode active material layer is produced by, for example, applying a negative electrode mixture slurry containing a negative electrode active material, conductive agent, and binder onto both sides of the negative electrode current collector excluding the negative electrode current collector exposed portion 22a, drying the applied coating, and then rolling. The negative electrode active material is a material that stores and releases lithium ions. Examples of the negative electrode active material include a carbon material, metal compound, alloy, and ceramic material.

The negative electrode current collector exposed portion 22a is formed to be integrated with the negative electrode current collector. The negative electrode current collector exposed portion 22a is projected from one end in the winding axis direction of the wound body to form the end face of the wound body. The negative electrode current collector exposed portion 22a is welded and connected to the negative electrode current collecting plate 51 provided between the columnar wound body 20 and the bottom face of the case 30. The negative electrode current collecting plate 51 is welded to the inner bottom face of the case 30 with a welding member 52. In the negative electrode 22 as well, similarly with the positive electrode 21, connection can be made with the negative electrode current collecting plate 51 or case 30 using tabs.

The case 30 is formed to have a bottomed cylindrical shape with a first opening 31, and accommodates the columnar wound body 20 and a non-aqueous electrolyte (not shown). The case 30 is a metal-made case, and functions as an external negative electrode terminal. The case 30 has a side wall portion 32 covering the outer periphery of the columnar wound body 20 and electrically connected to the negative electrode current collector. The side wall portion 32 of the case 30 is an example of the cylinder.

The sealing body 40 seals the first opening 31 of the case 30. The sealing body 40 is electrically connected to the positive electrode current collector through a plurality of positive electrode current collecting tabs 21a. The proximal end of the positive electrode current collecting tab 21a is connected to the first current collector, and the distal end of the positive electrode current collecting tab 21a is connected to the sealing body 40. The sealing body 40 is a metal-made body, and functions as an external positive electrode terminal. The sealing body 40 and the case 30 are insulated from each other with a gasket 70. The sealing body 40 may have an explosion protection mechanism, which is not shown.

The sealing body 40 has a first member 41 including a first face 41a facing away from the columnar wound body 20 (upper side in FIG. 1), and a second member 42 including a second face 42a facing a columnar wound body 20 side. The first member 41 is an annular member having a through hole 41b at a center for the positive electrode current collecting tab 21a to pass through. The second member 42 is a plate member for plugging the through hole 41b.

The distal end of the positive electrode current collecting tab 21a is welded to the first face 41a of the first member 41 and forms a first welding portion 43. The first welding portion 43 is sandwiched between the first face 41a and the second face 42a, and a pressure is applied from both of the first face 41a and second face 42a. In the first welding portion 43, the distal end of the plurality of positive electrode current collecting tabs 21a are overlapped and welded to the first face 41a of the first member 41. In the region of the first face 41a where the first welding portion 43 is formed, a recess deeper than the total thickness of the distal end of the plurality of positive electrode current collecting tabs 21a may be formed.

The first member 41 has a recessed portion 41c formed to be annular and having the first face 41a as the bottom face. The second member 42 has a center portion 42b plugging the through hole 41b of the first member 41 and an outer periphery portion 42c accommodated in the recessed portion 41c. The peripheral edge portion of the outer periphery portion 42c is welded and joined to the first member 41 throughout its entire periphery by a second welding portion 44 radially outside of the first welding portion 43. In this manner, even if a gap is formed between the first face 41a of the first member 41 and the second face 42a of the second member 42, sufficient sealing properties can be ensured in the case 30.

### << Embodiment 2 >>

Embodiment 2 of the present disclosure is described. The power storage device 10 of this embodiment is different from the above-described Embodiment 1 in terms of the configuration of the first member 41 and the second member 42. In the following, the points differing from the above-described Embodiment 1 are mainly described.

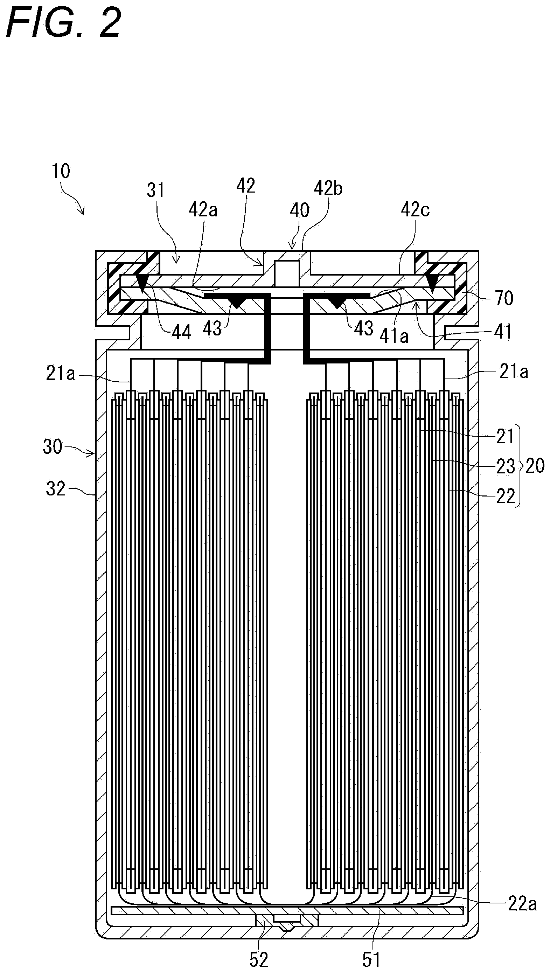

As shown in FIG. 2, the first member 41 does not have the recessed portion accommodating the second member 42. The outer peripheral edge portion of the first member 41 and the outer peripheral edge portion of the second member 42 are overlapped with each other and held by the gasket 70. The first member 41 and second member 42 are welded and joined to each other by the second welding portion 44 at the outer peripheral edge portion. In this case, no pressure is applied to the first welding portion 43 from the second face 42a, and a **sufficiently** large gap is present between the first face 41a and the second face 42a, more than the thickness of the distal end of the positive electrode current collecting tab 21a. Therefore, the effect of decreasing the contact resistance in the first welding portion 43 is milder than Embodiment 1. However, the disposition of the second member 42 has no effect from the distal end thickness of the positive electrode current collecting tab 21a, and therefore production process can be stabilized.

### << Embodiment 3 >>

Embodiment 3 of the present disclosure is described. The power storage device 10 of this embodiment is different from the above-described Embodiment 1 in terms of not including the metal-made case 30. In the following, the points differing from the above-described Embodiment 1 are mainly described.

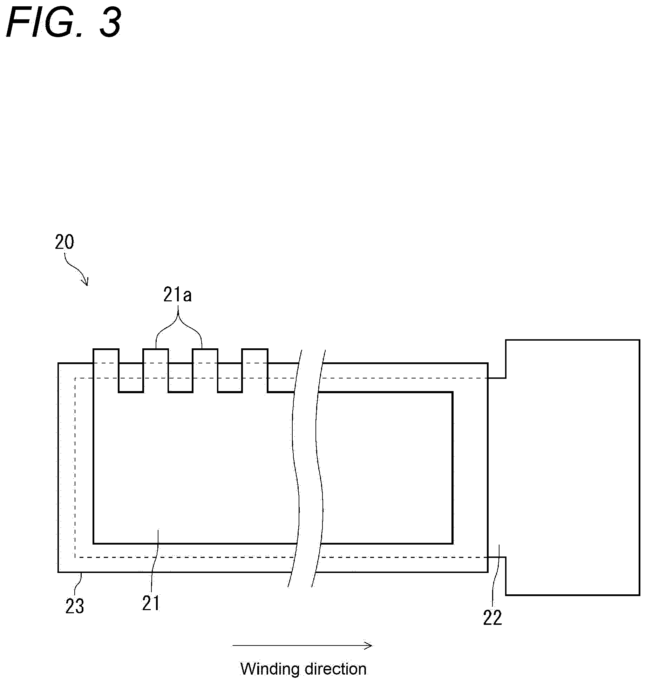

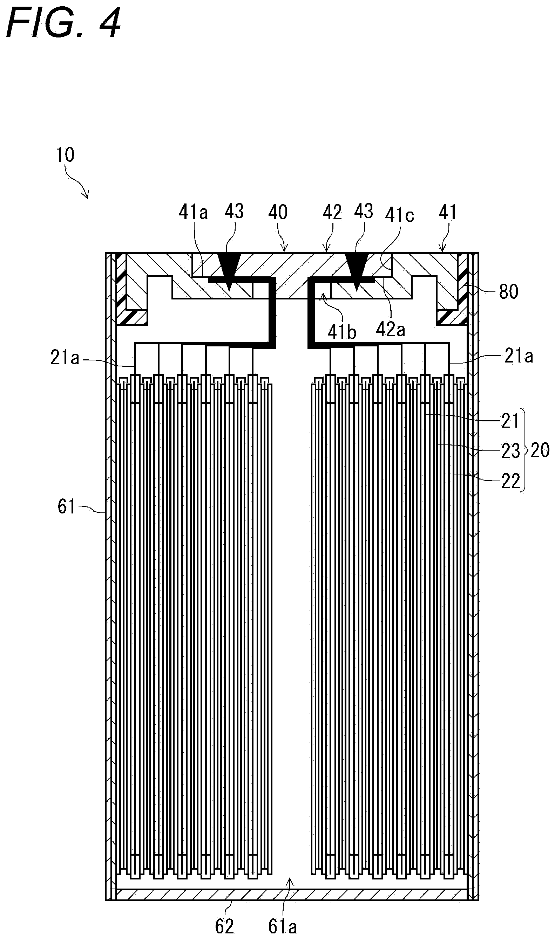

As shown in FIG. 3 and FIG. 4, in this embodiment, functions of the case 30 of Embodiment 1 are served by a cylinder 61 formed of a metal sheet wound body. The metal sheet is formed to be integrated with the negative electrode current collector, without limitation. The columnar wound body 20 is wound from left to right in FIG. 3. The cylinder 61 covers the outer periphery of the columnar wound body 20 and electrically connected to the negative electrode current collector.

The first opening 31 of the cylinder 61 is sealed with a sealing body 40. The cylinder 61 and sealing body 40 are insulated from each other with an insulative adhesive 80. The cylinder 61 has a second opening 61a at an opposite side of the first opening 31. The second opening 61a is sealed with a metal plate 62 (e.g., copper plate). The cylinder 61 and the metal plate 62 are welded and joined with each other throughout its entire periphery. Similarly with Embodiment 1, the negative electrode may be provided with a negative electrode current collector exposed portion, and the negative electrode current collector exposed portion and the metal plate 62 may be welded and joined.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure.

### Industrial Applicability

The present disclosure can be applied to a power storage device.

### Description of Reference Numerals

10: power storage device
20: columnar wound body
21: positive electrode (first electrode)
   21a: positive electrode current collecting tab (first tab)
22: negative electrode (second electrode)
   22a: negative electrode current collector exposed portion
   23: separator
30: case
   31: first opening
   32: side wall portion (cylinder)
40: sealing body
   41: first member
      41a: first face
      41b: through hole
      41c: recessed portion
   42: second member
      42a: second face
      42b: center portion
      42c: outer periphery portion
   43: first welding portion
   44: second welding portion
51: negative electrode current collecting plate
52: welding member
61: cylinder
   61a: second opening
62: metal plate
70: gasket
80: adhesive

## Claims

1. A power storage device (10) comprising:
a first electrode (21) having a strip first current collector and a first active material layer carried on the first current collector,
a second electrode (22) having a strip second current collector and a second active material layer carried on the second current collector; and
a separator (23) interposed between the first electrode (21) and the second electrode (22), wherein
the first electrode (21), the second electrode (22), and the separator (23) form a columnar wound body (20),
the power storage device (10) further comprises
a cylinder (32, 61) covering an outer periphery of the columnar wound body (20), the cylinder (32, 61) being electrically connected to the second current collector, and having a first opening (31),
a sealing body (40) that seals the first opening (31), and
at least one first tab (21a) that electrically connects the first current collector to the sealing body (40),
one end of the first tab (21a) is connected to the first current collector,
the other end of the first tab (21a) is connected to the sealing body (40),
the sealing body (40) has a first member (41) including a first face (41a) facing away from the columnar wound body (20), and a second member (42) including a second face (42a) facing the columnar wound body (20), the power storage device (10) is **characterized in that**
the other end of the first tab (21a) is welded to the first face (41a) of the first member (41) to form a first welding portion (43),
the first welding portion (43) is positioned between the first face (41a) and the second face (42a), and
the first member (41) is an annular member having a through hole (41b) at a center thereof for the first tab (21a) to pass through.

2. The power storage device (10) of claim 1, wherein the second member (42) plugs the through hole (41b).

3. The power storage device (10) of claim 2, wherein the first member (41) and the second member (42) are welded by a second welding portion (44) radially outside of the first welding portion (43).

4. The power storage device (10) of claim 3, wherein the first member (41) has a recessed portion (41c) formed into an annular shape and having the first face (41a) as a bottom face,
the second member (42) has a center portion (42b) plugging the through hole (41b) and an outer peripheral portion (42c) surrounding the center portion (42b), and
an entire periphery of the outer peripheral portion (42c) is joined to the first member (41) by the second welding portion (44).

5. The power storage device (10) of any one of claims 1 to 4, wherein the first tab (21a) is joined to the second face (42a) and the first face (41a).

6. The power storage device (10) of any one of claims 1 to 5, comprising a plurality of the first tabs (21a), and
at least two of the other ends of the first tabs (21a) are overlapped with each other and welded to the first face (41a) of the first member (41).

7. The power storage device (10) of any one of claims 1 to 6, wherein the cylinder (32, 61) is formed of a portion of a metal case (30).

8. The power storage device (10) of any one of claims 1 to 6, wherein the cylinder (32, 61) is formed of a metal sheet wound body (20).

## Patentansprüche

1. Energiespeichervorrichtung (10), umfassend:
eine erste Elektrode (21), die einen ersten streifenförmigen Stromkollektor und eine erste Aktivmaterialschicht aufweist, die auf dem ersten Stromkollektor getragen wird,
eine zweite Elektrode (22), die einen zweiten streifenförmigen Stromkollektor und eine zweite Aktivmaterialschicht umfasst, die auf dem zweiten Stromkollektor getragen wird; und
einen Separator (23), der zwischen der ersten Elektrode (21) und der zweiten Elektrode (22) angeordnet ist, wobei
die erste Elektrode (21), die zweite Elektrode (22) und der Separator (23) einen säulenförmigen gewickelten Körper (20) bilden,
die Energiespeichervorrichtung (10) ferner umfasst
einen Zylinder (32, 61), der einen äußeren Umfang des säulenförmigen gewickelten Körpers (20) bedeckt, wobei der Zylinder (32, 61) elektrisch mit dem zweiten Stromkollektor verbunden ist und eine erste Öffnung (31) aufweist,
einen Dichtungskörper (40), der die erste Öffnung (31) abdichtet, und
mindestens eine erste Lasche (21a), die den ersten Stromkollektor elektrisch mit dem Dichtungskörper (40) verbindet,
ein Ende der ersten Lasche (21a) mit dem ersten Stromkollektor verbunden ist,
das andere Ende der ersten Lasche (21a) mit dem Dichtungskörper (40) verbunden ist,
der Dichtungskörper (40) ein erstes Element (41), das eine erste Seite (41a) aufweist, die von dem säulenförmigen gewickelten Körper (20) abgewandt ist, und ein zweites Element (42) aufweist, das eine zweite Seite (42a) umfasst, die dem säulenförmigen gewickelten Körper (20) zugewandt ist, wobei die Energiespeichervorrichtung (10) **dadurch gekennzeichnet ist, dass**
das andere Ende der ersten Lasche (21a) an die erste Seite (41a) des ersten Elements (41) geschweißt ist, um einen ersten Schweißabschnitt (43) zu bilden,
der erste Schweißabschnitt (43) zwischen der ersten Seite (41a) und der zweiten Seite (42a) positioniert ist, und
das erste Element (41) ein ringförmiges Element ist, das ein Durchgangsloch (41b) in einer Mitte davon für den Durchgang der ersten Lasche (21a) aufweist.

2. Energiespeichervorrichtung (10) nach Anspruch 1, wobei das zweite Element (42) das Durchgangsloch (41b) verschließt.

3. Energiespeichervorrichtung (10) nach Anspruch 2, wobei das erste Element (41) und das zweite Element (42) durch einen zweiten Schweißabschnitt (44) radial außerhalb des ersten Schweißabschnitts (43) geschweißt sind.

4. Energiespeichervorrichtung (10) nach Anspruch 3, wobei das erste Element (41) einen vertieften Abschnitt (41c) aufweist, der in eine ringförmige Form gebildet ist und die erste Seite (41a) als eine untere Seite aufweist,
das zweite Element (42) einen mittleren Abschnitt (42b), der das Durchgangsloch (41b) verschließt, und einen äußeren Umfangsabschnitt (42c) aufweist, der den mittleren Abschnitt (42b) umgibt, und
ein gesamter Umfang des äußeren Umfangsabschnitts (42c) durch den zweiten Schweißabschnitt (44) mit dem ersten Element (41) verbunden ist.

5. Energiespeichervorrichtung (10) nach einem der Ansprüche 1 bis 4, wobei die erste Lasche (21a) mit der zweiten Seite (42a) und der ersten Seite (41a) verbunden ist.

6. Energiespeichervorrichtung (10) nach einem der Ansprüche 1 bis 5, die eine Vielzahl von den ersten Laschen (21a) umfasst, und
mindestens zwei der anderen Enden der ersten Laschen (21a) einander überlappen und an die erste Seite (41a) des ersten Elements (41) geschweißt sind.

7. Energiespeichervorrichtung (10) nach einem der Ansprüche 1 bis 6, wobei der Zylinder (32, 61) aus einem Abschnitt eines Metallgehäuses (30) gebildet ist.

8. Energiespeichervorrichtung (10) nach einem der Ansprüche 1 bis 6, wobei der Zylinder (32, 61) aus einem gewickelten Metallblechkörper (20) gebildet ist.

## Revendications

1. Dispositif de stockage d'énergie (10) comprenant :
une première électrode (21) ayant un premier collecteur de courant en bande et une première couche de matériau actif portée sur le premier collecteur de courant,
une seconde électrode (22) ayant un second collecteur de courant en bande et une seconde couche de matériau actif portée sur le second collecteur de courant ; et
un séparateur (23) intercalé entre la première électrode (21) et la seconde électrode (22), dans lequel :
la première électrode (21), la seconde électrode (22) et le séparateur (23) forment un corps colonnaire enroulé (20),
le dispositif de stockage d'énergie (10) comprend en outre :
un cylindre (32, 61) recouvrant une périphérie externe du corps colonnaire enroulé (20), le cylindre (32, 61) étant électriquement raccordé au second collecteur de courant, et ayant une première ouverture (31),
un corps d'étanchéité (40) scellant la première ouverture (31), et
au moins une première languette (21a) raccordant électriquement le premier collecteur de courant au corps d'étanchéité (40),
une extrémité de la première languette (21a) est raccordée au premier collecteur de courant,
l'autre extrémité de la première languette (21a) est raccordée au corps d'étanchéité (40),
le corps d'étanchéité (40) a un premier élément (41) comprenant une première face (41a) orientée à l'opposé du corps colonnaire enroulé (20), et un second élément (42) comprenant une seconde face (42a) faisant face au corps colonnaire enroulé (20), le dispositif de stockage d'énergie (10) est **caractérisé en ce que** :
l'autre extrémité de la première languette (21a) est soudée à la première face (41a) du premier élément (41) afin de former une première partie de soudage (43),
la première partie de soudage (43) est positionnée entre la première face (41a) et la seconde face (42a), et
le premier élément (41) est un élément annulaire ayant un trou débouchant (41b) au niveau de son centre pour que la première languette (21a) passe à travers.

2. Dispositif de stockage d'énergie (10) selon la revendication 1, dans lequel le second élément (42) bouche le trou débouchant (41b).

3. Dispositif de stockage d'énergie (10) selon la revendication 2, dans lequel le premier élément (41) et le second élément (42) sont soudés par une seconde partie de soudage (44) radialement à l'extérieur de la première partie de soudage (43).

4. Dispositif de stockage d'énergie (10) selon la revendication 3, dans lequel le premier élément (41) a une partie évidée (41c) formée dans une forme annulaire et ayant la première face (41a) en tant que face inférieure,
le second élément (42) a une partie centrale (42b) bouchant le trou débouchant (41b) et une partie périphérique externe (42c) entourant la partie centrale (42b), et
toute la périphérie de la partie périphérique externe (42c) est assemblée au premier élément (41) par la seconde partie de soudage (44).

5. Dispositif de stockage d'énergie (10) selon l'une quelconque des revendications 1 à 4, dans lequel la première languette (21a) est assemblée à la seconde face (42a) et à la première face (41a).

6. Dispositif de stockage d'énergie (10) selon l'une quelconque des revendications 1 à 5, comprenant une pluralité de premières languettes (21a), et
au moins deux des autres extrémités des premières languettes (21a) se chevauchent entre elles et sont soudées à la première face (41a) du premier élément (41).

7. Dispositif de stockage d'énergie (10) selon l'une quelconque des revendications 1 à 6, dans lequel le cylindre (32,61) est formé avec une partie d'un boîtier métallique (30).

8. Dispositif de stockage d'énergie (10) selon l'une quelconque des revendications 1 à 6, dans lequel le cylindre (32, 61) est formé avec un corps de tôle enroulé (20).
